# EUROPÄISCHE PATENTSCHRIFT

(11) **EP 3 504 721 B1**
(45) Veröffentlichungstag und Bekanntmachung des Hinweises auf die Patenterteilung: **23.08.2023**
(21) Anmeldenummer: 17783749.9
(22) Anmeldetag: 25.09.2017
(51) Int. Cl.: H01F 27/04, H01B 17/34, H02B 5/00, H02G 1/02, H01R 13/53, H02G 15/02

(54) **MOBILER TRANSFORMATORDURCHFÜHRUNGSANSCHLUSS**
MOBILE TRANSFORMER BUSHING TERMINAL
RACCORD DE TRAVERSÉE DE TRANSFORMATEUR MOBILE

(30) Priorität: 24.10.2016 DE 102016220852
(43) Veröffentlichungstag der Anmeldung: 03.07.2019
(73) Patentinhaber: Siemens Energy Global GmbH & Co. KG, 81739 München (DE)
(72) Erfinder: KAUFMANN, Wolfgang, 4100 Ottensheim (AT); BACHL, Michael, 4203 Altenberg bei Linz (AT); NEUMÜLLER, Gernot, 4040 Lichtenberg (AT)
(86) Internationale Anmeldenummer: PCT/EP2017/074172
(87) Internationale Veröffentlichungsnummer: WO 2018/077550

(56) Entgegenhaltungen:
- EP-A1- 0 683 555
- AT-B- 191 985
- DE-B- 1 235 419
- DE-B1- 2 448 705
- JP-A- H06 197 419
- JP-A- 2008 278 601
- Silec Cable: "High & Extra High Voltage 63 to 225kV stand-by links", , 1. Januar 2006 (2006-01-01), Seiten 1-19, XP055068907, Gefunden im Internet: URL:http://www.sileccable.com/Portals/fran ce/pdf/en/2151_HVSBL.pdf [gefunden am 2013-07-01]
- LEMKE E ET AL: "Ultra-wide-band PD diagnostics of power cable terminations in service", IEEE TRANSACTIONS ON DIELECTRICS AND ELECTRICAL INSULATION, IEEE SERVICE CENTER, PISCATAWAY, NJ, US, Bd. 15, Nr. 6, 1. Dezember 2008 (2008-12-01), Seiten 1570-1575, XP011239906, ISSN: 1070-9878, DOI: 10.1109/TDEI.2008.4712659

## Beschreibung

Die Erfindung betrifft ein elektrisches Gerät zum Anschluss an ein Hochspannungsnetz mit einem Kessel, in dem ein magnetisierbarer Kern und wenigstens eine den Kern zumindest abschnittsweise umschließende Wicklung angeordnet sind, wobei der Kessel mit einem Isolierfluid befüllt ist.

Ein solches elektrisches Gerät ist aus der AT 191 985 B bekannt. Dort ist ein elektrisches Gerät offenbart, das als Transformator ausgeführt ist. Ein mit einem Kabelendverschluss ausgerüstetes Kabel ist fest am Transformator montiert. Der Kabelendverschluss weist einen Anschlussbolzen auf, der über einen seilförmigen Leiter mit einer in dem Tank des Transformators angeordneten Wicklung verbunden ist.

Die JP H 06 197419 A zeigt einen Leistungsschalter, der über eine Hochspannungsdurchführung mit einer Freiluftleitung eines Versorgungsnetzes verbindbar ist. Der innere Leiter der Hochspannungsdurchführung ist mit dem Festkontakt eines Leistungsschalters verbunden, wohingegen der Bewegkontakt des Schalters an eine Kabelsteckbuchse angeschlossen ist. Ein elektrisches Gerät mit einer Vorrichtung zum Anschluss einer Durchführung ist der besagten Druckschrift jedoch nicht zu entnehmen.

Die EP 0 683 555 A1 betrifft einen Kabelendverschluss eines Hochspannungskabels, das für einen Einsatz zwischen 10 und 245 kV dient.

Weiterer Stand der Technik ist in der DE 24 48 705 B1 und der DE 12 35 419 B beschrieben.

Elektrische Geräte, wie beispielsweise Transformatoren oder aber Drosseln, die für den Anschluss an ein Hochspannungsnetz ausgelegt sind, weisen in der Regel Hochspannungsdurchführungen auf, die fest an einem mit einem Isolierfluid befüllten Kessel montiert sind. Ein in den Ölraum des Kessels hinein ragendes Einsteckende der Hochspannungsdurchführung ist mit einer Wicklung des elektrischen Geräts verbunden, wohingegen ein vom Kessel abgewandter Freiluftanschluss der Hochspannungsdurchführung zum Anschluss einer luftisolierten Hochspannungsleitung dient. Da der Kessel des elektrischen Geräts auf Erdpotenzial liegt, muss der mit einer Hochspannung beaufschlagte Freiluftanschluss mit einem ausreichenden Abstand zum Kessel gehalten werden, um Spannungsüberschläge zu vermeiden. Aus diesem Grunde sind die Hochspannungsdurchführungen in Abhängigkeit der jeweiligen Betriebsspannung dimensioniert, so dass sich bei höheren Spannungen die Montage und Halterung der Hochspannungsdurchführung am Kessel aufwändig gestaltet. Insbesondere ist die Kombination aus Kessel und Hochspannungsdurchführung raumgreifend, so dass nicht jeder Aufstellungsort für einen solchen Transformator in Frage kommt. Darüber hinaus wird mehr und mehr eine Flexibilität bei der Positionierung der Freiluftanschlüsse der Hochspannungsdurchführung gefordert. Diese Flexibilität ist jedoch aufgrund der starren Verbindung zwischen Hochspannungsdurchführung und Kessel nicht gegeben.

Aufgabe der Erfindung ist es daher, eine Möglichkeit zu schaffen, ein elektrisches Gerät der eingangs genannten Art schnell, flexibel und kostengünstig an ein Hochspannungsnetz anzuschließen.

Die Erfindung löst diese Aufgabe durch ein elektrisches Gerät gemäß Anspruch 1.

Erfindungsgemäß ist ein elektrisches Gerät einschließlich einer Vorrichtung bereitgestellt, die eine Verbindung einer z.B. luftisolierten Hochspannungsleitung mit einer Wicklung ermöglicht, die in dem Ölraum eines Kessels eines Transformators oder einer Drossel angeordnet ist. Zum Anschluss des luftisolierten Hochspannungsleiters bildet die Hochspannungsdurchführung zweckmäßigerweise einen Freiluftanschluss aus, der mit dem Hochspannungsleiter der Hochspannungsdurchführung verbunden ist. Der Hochspannungsleiter erstreckt sich durch einen sich in einer Längsrichtung erstreckenden Durchführungsisolator, der an dem von dem Freiluftanschluss abgewandten Kontaktende den Verbindungsleiter unmittelbar anliegt oder unter Zwischenschaltung eines weiteren Leitungsstücks kontaktiert. Die Hochspannungsdurchführung ist dabei an dem Gehäuse der Vorrichtung befestigt. Hierzu weist die Hochspannungsdurchführung einen Befestigungsabschnitt, beispielsweise in Gestalt eines Flansches auf, der den Durchführungsisolator umfänglich umgibt und fest mit diesem verbunden ist. Mit einem Einführabschnitt erstreckt sich die Hochspannungsdurchführung in das Gehäuse hinein.

Im Rahmen der Erfindung ist der Hochspannungsleiter der Hochspannungsdurchführung direkt mit dem Kabelanschluss der Vorrichtung verbunden. Damit unterscheidet sich die erfindungsgemäße Vorrichtung von einem Transformator oder einer Drossel. Mit dem Passus "direkt verbunden" ist im Rahmen der Erfindung zum Ausdruck gebracht, dass der Strompfad zwischen dem Hochspannungsleiter der Durchführung und dem Kabelanschluss, also der Verbindungleiter, frei von induktiven Bauteilen wie Wicklungen oder dergleichen ist. Der Verbindungsleiter ist im Rahmen der Erfindung eine einfache Leiterverbindung, die den Durchführungsleiter ohne Zwischenschaltung von induktiven Komponenten mit dem Kabelanschluss verbindet. Der Verbindungsleiter ist somit niederinduktive Leiterverbindung.

Der Verbindungsleiter ist zweckmäßigerweise kompakt ausgebildet und kann vorteilhafterweise mechanisch mit der Hochspannungsdurchführung oder aber mit einer Durchführungssteckbuchse mechanisch fest verbunden sein. Eine separate isolierte Halterung des Verbindungsleiters in dem auf Erdpotenzial liegenden Gehäuse ist somit überflüssig geworden. Hierdurch werden die Kosten der erfindungsgemäßen Vorrichtung weiter reduziert. Eine zusätzliche oder alternative Halterung des Verbindungsleiters ermöglicht der Kabelanschluss. Der Kabelanschluss ist ebenfalls fest an dem Gehäuse montiert, wobei er sich bevorzugt unter Zwischenschaltung eines Isolierabschnitts zu dem Verbindungsleiter hin erstreckt und somit einen mechanischen Halt des Verbindungsleiters an dem Gehäuse bereitstellt.

Vorteilhafterweise erstreckt sich der Verbindungsleiter innerhalb einer Abschirmelektrode. Die umfängliche geschlossene Abschirmelektrode umschließt den Verbindungleiter kranz-, ring- oder rohrförmig. Die Abschirmelektrode dient der Absteuerung hoher elektrischer Feldstärken und liegt auf dem gleichen Potential wie der Verbindungsleiter.

Vorteilhafterweise ist der Kabelanschluss als Kabelsteckbuchse ausgeführt. Die Kabelsteckbuchse weist beispielsweise einen an dem Gehäuse angebrachten Flanschabschnitt auf, wobei sich ein aus einem festen Isolierstoff bestehender Buchsenabschnitt zu einem metallischen Kontaktende hin erstreckt. Das metallische Kontaktende ist fest mit dem Verbindungsleiter verbunden. Wird ein Kabel mit einem formkomplementär ausgebildeten Einführabschnitt in die Kabelsteckbuchse eingeführt, kontaktiert der Kabelinnenleiter das metallische Kontaktstück und somit den Verbindungsleiter. Die Ausführung des Kabelanschlusses als Kabelsteckbuchse vereinfacht und beschleunigt die Montage beziehungsweise die Verbindung der erfindungsgemäßen Vorrichtung mit einem elektrischen Gerät, wie beispielsweise einem Transformator oder einer Drossel.

Vorteilhafterweise ist die Hochspannungsdurchführung über eine Durchführungsteckbuchse mit dem Verbindungsleiter elektrisch verbunden. Gemäß dieser erfindungsgemäßen Variante ist eine Durchführungssteckbuchse vorgesehen, wobei die Durchführungssteckbuchse vorteilhafterweise einen Befestigungsabschnitt zur Befestigung an dem Gehäuse aufweist. Darüber hinaus verfügt die Durchführungssteckbuchse über einen hohlen Aufnahmeabschnitt aus einem elektrisch nichtleitenden Isolierstoff, der sich in der befestigten Stellung in das Gehäuse hinein erstreckt, wobei in einem geschlossenen und verjüngten Endbereich des Aufnahmeabschnitts ein metallisches Kontaktteil angeordnet ist, das sich durch den Isolierstoff des Aufnahmeabschnitts hindurch erstreckt oder diesen zum geschlossenen Endbereich hin verlängert. Gemäß dieser Ausführung der Erfindung weist jede Durchführungssteckbuchse ein offenes Ende etwa in Höhe der Gehäusewandung auf, die das Einführen eines Einsteckabschnitts der Hochspannungsdurchführung ermöglicht. In Einsteckrichtung erstreckt sich von dem Befestigungsabschnitt der Durchführungssteckbuchse der Aufnahmeabschnitt in das Innere des Gehäuses hinein, wobei der Aufnahmeabschnitt aus einem Isolierstoff gefertigt ist, der die notwendige Spannungsfestigkeit zwischen dem in Betrieb auf einem Hochspannungspotenzial liegenden Kontaktstück und dem Gehäuse bereitstellt, das sich auch bei Betrieb auf einem Erdpotenzial befindet.

Um die notwendige Spannungsfestigkeit bereitzustellen, sind der Aufnahmeabschnitt und der Einsteckabschnitt der Hochspannungsdurchführung formkomplementär zueinander ausgebildet, so dass aufgrund des Eigengewichts der Hochspannungsdurchführung der Einsteckabschnitt fest gegen die Innenwandung des Aufnahmeabschnitts gepresst wird, um auf diese Weise Spannungsspitzen zwischen Hochspannungsdurchführung und der Durchführungseinsteckbuchse zu vermeiden. Gemäß dieser Weiterentwicklung ist das Kontaktteil der Durchführungssteckbuchse, das über den Aufnahme- und den Befestigungsabschnitt fest mit dem Gehäuse verbunden ist, mit dem Verbindungsleiter mechanisch und elektrisch verbunden, so dass der Verbindungsleiter über die Durchführungssteckbuchse mechanisch mit dem Gehäuse verbunden ist. Eine zusätzliche mechanische Halterung kann im Rahmen der Erfindung über eine Kabelsteckbuchse auf ähnliche Art und Weise erfolgen.

Vorteilhafterweise ist das Gehäuse auf Rollen abgestützt.

Aufgrund der Anordnung des Gehäuses auf Rollen ist eine mobile Vorrichtung bereitgestellt, die selbst nach der Montage der in der Regel schweren Hochspannungsdurchführung leicht und einfach verschoben werden kann. Auf diese Weise ist die Montage eines elektrischen Geräts erleichtert, da sie schneller und kostengünstiger erfolgen kann.

Erfindungsgemäß ist das zweite Isolierfluid ein mineralisches Öl, ein pflanzliches Öl oder ein synthetisches Öl.

Zweckmäßigerweise verfügt die Hochspannungsdurchführung über einen Schirmabschnitt zur Absteuerung der elektrischen Feldstärke bei Betrieb.

Da wenigstens eine Wicklung des erfindungsgemäßen elektrischen Geräts mit dem Kabelanschluss der oben ausführlich dargestellten Vorrichtung verbunden ist, entfällt im Rahmen der Erfindung die Notwendigkeit den Kessel mit einer oder sogar mehreren raumgreifenden Hochspannungsdurchführungen zu bestücken. Dies ermöglicht eine schnelle und variable Montage und Inbetriebnahme des erfindungsgemäßen elektrischen Geräts, das beispielweise als Transformator oder Drossel ausgeführt ist.

Gemäß einer diesbezüglich zweckmäßigen Weiterentwicklung bildet das elektrische Gerät einen Gerätekabelanschluss aus, wobei der Kabelanschluss der Vorrichtung über ein Kabel mit dem Gerätekabelanschluss verbunden ist. Mit Hilfe dieser Kabelverbindung kann die im Vergleich zum gesamten elektrischen Gerät leichte Vorrichtung auf einfache Art und Weise an die Stellen verschoben werden, an denen eine besonders leichter Netzanschluss ermöglicht ist.

Vorteilhafterweise weist das erfindungsgemäße elektrische Gerät mehrere Wicklungen auf, die jeweils mit einer erfindungsgemäßen Vorrichtung verbunden. Ist das elektrische Gerät beispielsweise ein Transformator können alle Oberspannungswicklungen mit einer erfindungsgemäßen Vorrichtung verbunden sein. Die mit den Unterspannungswicklungen verbundenen Durchführungen sind üblicherweise kompakter und können daher direkt am Kessel befestigt sein. Selbstverständlich ist es auch möglich jede Unterspannungswicklung mit einer Vorrichtung zu verbinden. Ist das erfindungsgemäße elektrische Gerät als Drossel ausgeführt, ist zweckmäßigerweise jede Wicklung mit einer Vorrichtung verbunden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung sowie ein Ausführungsbeispiel des erfindungsgemäßen elektrischen Geräts in einer Seitenansicht schematisch und
- Figur 2: die Vorrichtung und das elektrische Gerät gemäß Figur 1 in einer Draufsicht schematisch verdeutlichen.

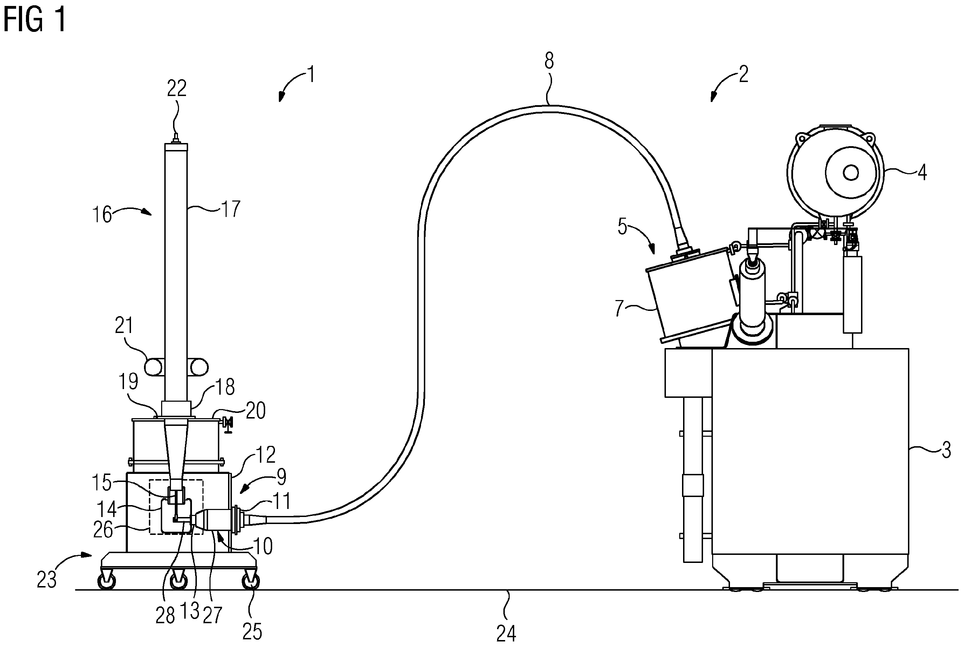

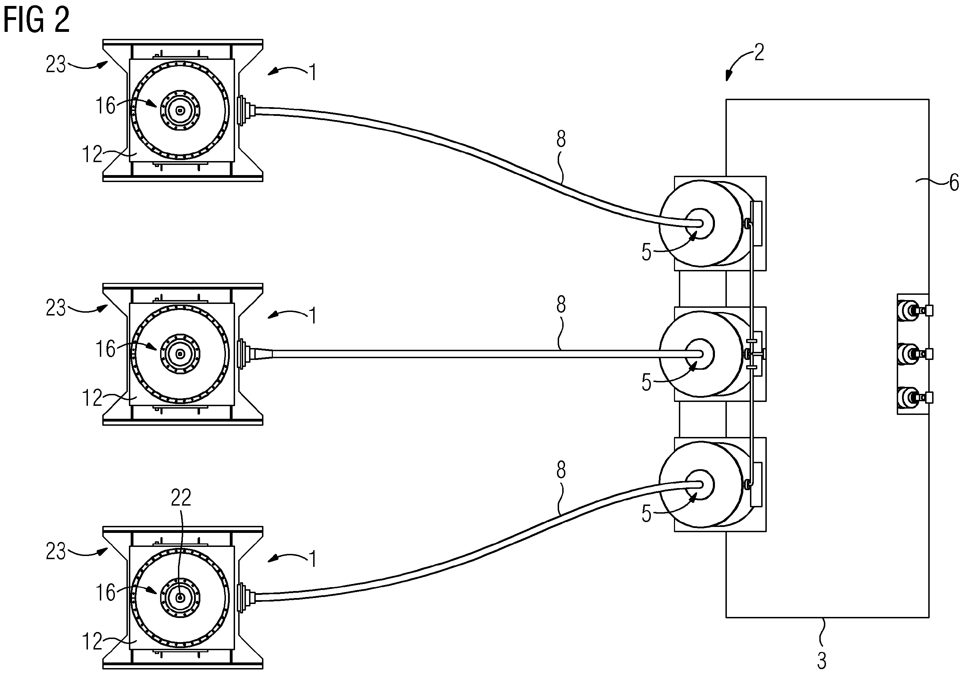

Figur 1 zeigt ein Ausführungsbeispiel einer Vorrichtung 1 sowie ein Ausführungsbeispiel des erfindungsgemäßen elektrischen Geräts 2. Das elektrische Gerät 2 ist in den Figuren 1 und 2 als Transformator ausgeführt und umfasst einen Kessel 3, in dem figürlich nicht dargestellte Wicklungen und ein magnetisierbarer Kern angeordnet sind. Der Kern ist aus Stahlblechen zusammengesetzt und bildet Schenkel aus, die von einer Unter- und einer Oberspannungswicklung umschlossen sind. Die Schenkel sind über ein oberes und unteres Joch miteinander verbunden. Zur Isolation und Kühlung der Wicklungen ist der Kessel 3 mit einem ersten Isolierfluid, beispielsweise einem mineralischen oder einem Esteröl, befüllt, wobei oberhalb des Kessels 3 ein Ausdehnungsgefäß 4 angeordnet ist, das mit dem Inneren des Kessels verbunden ist, so dass temperaturbedingte Volumenschwankungen des ersten Isolierfluids von dem Ausdehnungsgefäß 4 sicher aufgenommen werden können.

Zur Verbesserung der Kühlung ist der Kessel mit figürlich nicht dargestellten Kühlrippen ausgerüstet. Darüber hinaus ist es im Rahmen der Erfindung möglich, das erste Isolierfluid über eine ebenfalls figürlich nicht dargestellte Kühleinrichtung aktiv oder passiv umzuwälzen.

Das elektrische Gerät 2 verfügt ferner über einen Gerätekabelanschluss 5, der oberhalb eines Deckels 6 des Kessels 3 angeordnet ist und ein domartiges Gehäuse 7 ausbildet. In das domartige Gehäuse 7 erstreckt sich von innen eine mit der Oberspannungswicklung verbundene Wicklungsanschlussleitung hinein, die dort mit dem Einführabschnitt eines Kabels 8 verbunden ist. Der Gerätekabelanschluss 5 sorgt für die elektrische Verbindung des isolierten Innenleiters des Kabels 8 mit einer der Wicklungen des Transformators 2. Das Kabel 8 erstreckt sich von dem Gerätekabelanschluss 5 zu einem Einsteckende 9, das in eine Kabelsteckbuchse 10 der Vorrichtung 1 eingeführt ist. Die Kabelbuchse 10 ist mit einem Kabelbefestigungsabschnitt 11 an einem Gehäuse 12 der Vorrichtung 1 mechanisch befestigt. Von dem Kabelbefestigungsabschnitt 11 erstreckt sich ein aus Isolierstoff bestehender Kabeleinführabschnitt 27 zu einem Kabelendkontakt 13, der über einen elektrisch leitenden Verbindungsleiter 28, der sich innerhalb einer Abschirmelektrode 14 erstreckt, mit einem Hochspannungsleiter 15 einer Hochspannungsdurchführung 16 verbunden, wobei sich der Hochspannungsleiter 15 durch einen elektrisch nichtleitenden Durchführungsisolator 17 erstreckt. Der Durchführungsisolator 17 ist von einem ringförmig ausgebildeten Befestigungsabschnitt 18 umschlossen, der einen Flansch 19 ausbildet, mit dem der Befestigungsabschnitt 18 und somit die gesamte Hochspannungsdurchführung 16 fest an dem Gehäuse 12 montiert ist.

Das innen hohle Gehäuse 12 weist einen hier kastenförmigen Unterbau auf, an dem sich ein kreiszylindrischer Durchführungsanbau 20 anschließt. Die Ausgestaltung des Gehäuses ist jedoch im Rahmen der Erfindung grundsätzlich beliebig. Darüber hinaus ist in diesem Ausführungsbeispiel ein optionaler Abschirmring 21 zur Absteuerung der elektrischen Feldstärken erkennbar, die bei Betrieb des elektrischen Geräts 2 entstehen. An der von dem Gehäuse 12 abgewandten Ende weist die Hochspannungsdurchführung 16 einen Freiluftanschluss 22 auf, der zum Anschluss eines luftisolierten Hochspannungsleiters vorgesehen ist. Das Gehäuse 12 der Vorrichtung 1 ist mit einem zweiten

Isolierfluid, beispielsweise einem mineralischem Öl, einem Esteröl, einem pflanzlichen Öl oder dergleichen, befüllt, das die notwendige Isolierung zwischen dem auf Erdpotenzial liegenden Gehäuse 12 und den bei Betrieb mit Hochspannung beaufschlagten Bauteilen, wie dem Freiluftanschluss 22, dem Hochspannungsleiter 15, dem Verbindungsleiter 28, der Abschirmelektrode, dem Kontaktteil 13 und dem Innenleiter des Kabels 8.

Das Gehäuse 12 ist ferner auf einem Rollenwagen 23 abgestützt, der auf einer Bodenfläche 24 abrollende Rollen 25 aufweist. Die gesamte Vorrichtung 1 ist somit über die Rollen 25 an dem Boden 24 abgestützt und kann daher leicht verschoben werden. Aufgrund der Kabelverbindung zwischen der Vorrichtung 1 und dem Kessel 3 ist lediglich ein Mindestabstand zwischen dem Freiluftanschluss 22 und Komponenten auf Erdpotenzial einzuhalten. Das Kabel 8 besteht zweckmäßigerweise auf einem Innenleiter, der von einem elektrisch isolierenden Feststoff ummantelt ist.

Zur Erleichterung der Montage ist das Gehäuse 12 mit einer Montageöffnung 26 versehen, die bei Bedarf geöffnet werden kann, um Zugang zum Inneren des Gehäuses 12 zu gewähren.

Figur 2 zeigt das elektrische Gerät 2 und die Vorrichtung 1 gemäß Figur 1 in einer Draufsicht. Es ist erkennbar, dass der Transformator 2 dreiphasig ausgebildet ist und über drei Kabelanschlüsse 5 verfügt, wobei das in den Durchführungskabelanschluss 5 eingeführte Kabel 8 jeweils elektrisch mit einer Wicklung des Transformators 2 verbunden ist.

Für jeden Durchführungskabelanschluss 5 ist eine Vorrichtung 1 vorgesehen. Die Vorrichtung 1 und das erfindungsgemäße elektrische Gerät 2 können daher einfach transportiert und schnell Vorort montiert werden.

## Patentansprüche

1. Elektrisches Gerät (2) zum Anschluss an ein Hochspannungsnetz mit einem Kessel (3), in dem ein magnetisierbarer Kern und wenigstens eine den Kern zumindest abschnittsweise umschließende Wicklung angeordnet sind, wobei der Kessel (3) mit einem ersten Isolierfluid befüllt ist,
**dadurch gekennzeichnet**-, dass
das elektrische Gerät (2) eine Vorrichtung aufweist, wobei die wenigstens eine Wicklung mit einem Kabelanschluss (9) der Vorrichtung (1) verbunden ist, die
- ein Gehäuse (12), das mit einem zweiten Isolierfluid befüllt ist, das ein mineralisches Öl , ein pflanzliches Öl oder ein synthetisches Öl ist,
- eine an dem Gehäuse (12) befestigbaren Hochspannungsdurchführung (16), die einen sich durch einen Durchführungsisolator (17) erstreckenden Hochspannungsleiter (15) aufweist,
- den an dem Gehäuse (12) vorgesehenen Kabelanschluss (9) zum Anschließen eines Hochspannungskabels (8) und
- einen in dem Gehäuse (12) isoliert gehaltenen und von dem zweiten Isolierfluid umgebenen Verbindungsleiter (28) aufweist, der den Kabelanschluss (9) direkt mit dem Hochspannungsleiter (15) der Hochspannungsdurchführung (16) verbindet.

2. Elektrisches Gerät (2) nach Anspruch 1,
**dadurch gekennzeichnet, dass**
der Kabelanschluss (9) als Kabelsteckbuchse (27) ausgeführt ist.

3. Elektrisches Gerät (2) nach einem der vorhergehenden Ansprüche,
**dadurch gekennzeichnet, dass**
die Hochspannungsdurchführung (16) über eine Durchführungssteckbuchse mit dem Verbindungsleiter (28) elektrisch verbunden ist.

4. Elektrisches Gerät (2) nach einem der vorhergehenden Ansprüche,
**dadurch gekennzeichnet, dass**
das Gehäuse (12) auf Rollen (25) abgestützt ist.

5. Elektrisches Gerät (2) nach einem der vorhergehenden Ansprüche,
**dadurch gekennzeichnet, dass**
der Verbindungsleiter (28) sich zumindest abschnittsweise innerhalb einer Abschirmelektrode (14) erstreckt.

6. Elektrisches Gerät (2) nach einem der vorhergehenden Ansprüche,
**dadurch gekennzeichnet, dass**
das Gehäuse (12) mit einem Ausdehnungsgefäß verbunden ist.

7. Elektrisches Gerät (2) nach Anspruch 1,
**dadurch gekennzeichnet, dass**
an dem Kessel (3) ein Gerätekabelanschluss (5) ausgebildet ist, wobei der Kabelanschluss (9) der Vorrichtung (1) über ein Hochspannungskabel (8) mit dem Gerätekabelanschluss (5) verbunden ist.

8. Elektrisches Gerät (2) nach Anspruch 1 oder 7,
**dadurch gekennzeichnet, dass**
mehrere Wicklungen jeweils mit einer Vorrichtung (1) gemäß einem der vorhergehenden Ansprüche verbunden ist.

## Claims

1. Electrical device (2) for connection to a high-voltage supply system, comprising a tank (3) in which a magnetizable core and at least one winding which surrounds the core at least in sections are arranged, wherein the tank (3) is filled with a first insulating fluid, **characterized in that**
- the electrical device (2) has an apparatus, wherein the at least one winding is connected to a cable connection (9) of the apparatus (1) which has
- a housing (12) which is filled with a second insulating fluid which is an mineral oil, a vegetable oil or a synthetic oil,
- a high-voltage leadthrough (16) which can be fastened to the housing (12) and which has a high-voltage conductor (15) which extends through a leadthrough insulator (17),
- the cable connection (9), which is provided on the housing (12), for connecting a high-voltage cable (8), and
- a connecting conductor (28) which is held in the housing (12) in an insulated manner and is surrounded by the second insulating fluid and connects the cable connection (9) directly to the high-voltage conductor (15) of the high-voltage leadthrough (16).

2. Electrical device (2) according to Claim 1,
**characterized in that**
the cable connection (9) is designed as a cable plug-in bushing (27).

3. Electrical device (2) according to either of the preceding claims,
**characterized in that**
the high-voltage leadthrough (16) is electrically connected to the connecting conductor (28) by means of a leadthrough plug-in bushing.

4. Electrical device (2) according to one of the preceding claims,
**characterized in that**
the housing (12) is supported on rollers (25).

5. Electrical device (2) according to one of the preceding claims,
**characterized in that**
the connecting conductor (28) extends within a shielding electrode (14) at least in sections.

6. Electrical device (2) according to one of the preceding claims,
**characterized in that**
the housing (12) is connected to an expansion vessel.

7. Electrical device (2) according to Claim 1,
**characterized in that**
a device cable connection (5) is formed on the tank (3), wherein the cable connection (9) of the apparatus (1) is connected to the device cable connection (5) by means of a high-voltage cable (8).

8. Electrical device (2) according to Claim 1 or 7,
**characterized in that**
a plurality of windings are each connected to an apparatus (1) according to one of the preceding claims.

## Revendications

1. Appareil (2) électrique de raccordement à un réseau en haute tension comprenant une cuve (3), dans lequel sont montés un noyau magnétisable et au moins un enroulement entourant le noyau au moins par endroits, dans lequel la cuve (3) est remplie d'un premier fluide isolant,
**caractérisé en ce que**
l'appareil (2) électrique a un dispositif, dans lequel le au moins un enroulement est relié au dispositif par un raccord (9) par câble du dispositif (1), qui a
- une boîte (12), qui est remplie d'un deuxième fluide isolant, qui est une huile minérale, une huile végétale ou une huile synthétique,
- une traversée (16) en haute tension, qui peut être fixée à la boîte (12) et qui a un conducteur (15) en haute tension s'étendant dans un isolateur (17) de traversée,
- un raccord (9) par câble prévu sur la boîte (12) pour le raccordement d'un câble (8) en haute tension, et
- un conducteur (28) de liaison, qui est maintenu isolé dans la boîte (12), qui est entouré du deuxième fluide isolant et qui relie le raccord (9) par câble directement au conducteur (15) en haute tension de la traversée (16) en haute tension.

2. Appareil (2) électrique suivant la revendication 1,
**caractérisé en ce que**
le raccord (9) par câble est réalisé sous la forme d'une prise femelle (27) de câble.

3. Appareil (2) électrique suivant l'une des revendications précédentes,
**caractérisé en ce que**
la traversée (16) en haute tension est reliée électriquement au conducteur (28) de liaison par une prise femelle de traversée.

4. Appareil (2) électrique suivant l'une des revendications précédentes,
**caractérisé en ce que**
la boîte (12) est montée sur roulettes (25).

5. Appareil (2) électrique suivant l'une des revendications précédentes,
**caractérisé en ce que**
le conducteur (28) de liaison s'étend au moins par endroits dans une électrode (14) de protection.

6. Appareil (2) électrique suivant l'une des revendications précédentes,
**caractérisé en ce que**
la boîte (12) est reliée à un bac d'expansion.

7. Appareil (2) électrique suivant la revendication 1,
**caractérisé en ce que**,
sur la cuve (3) est constitué un raccord (5) de câble d'appareil, dans lequel le raccord (9) de câble du dispositif (1) est relié au raccord (5) de câble d'appareil par un câble (8) en haute tension.

8. Appareil (2) électrique suivant la revendication 1 ou 7,
**caractérisé en ce que**
plusieurs enroulements sont reliés respectivement à un dispositif (1) suivant l'une des revendications précédentes.
